# EUROPEAN PATENT APPLICATION

(11) **EP 4 512 859 A1**
(43) Date of publication of application: **26.02.2025**
(21) Application number: 23907264.8
(22) Date of filing: 21.07.2023
(51) Int. Cl.: C08L 67/02, C08L 67/04, C08L 1/02

(54) **BIODEGRADABLE PLASTIC RESIN COMPOSITION, MOLDED PRODUCT USING SAME, AND MANUFACTURING METHOD THEREFOR**

(30) Priority: 21.12.2022 KR 20220180674
(71) Applicant: Anpoly Inc., Gyeongsangbuk-do 37673 (KR)
(72) Inventor: RHO, Sang Cheol, Pohang-si Gyeongsangbuk-do 37685 (KR); SEO, Eun Ji, Pohang-si Gyeongsangbuk-do 37662 (KR); JUNG, Jun Yeong, Busan 46506 (KR); LEE, Se Hui, Pohang-si Gyeongsangbuk-do 37664 (KR)
(74) Representative: Potter Clarkson
(86) International application number: PCT/KR2023/010567
(87) International publication number: WO 2024/135972

(57) **Abstract**

The present invention relates to a biodegradable plastic resin composition, a molded product using same, and a manufacturing method therefor. The biodegradable plastic resin composition according to an embodiment of the present invention comprises a biodegradable plastic and a nanocellulose additive, and can provide a biodegradable plastic molded product having improved moldability by supplementing the low crystallinity and durability of the biodegradable plastic.

## Description

### TECHNICAL FIELD

The present disclosure relates to a biodegradable plastic resin composition, a molded product using the same, and a manufacturing method therefor.

### BACKGROUND ART

Plastics, which have exponentially improved the convenience of daily life, are used for a wide range of purposes, replacing traditional materials, such as glass, metal, wood, paper, and the like. Plastics have had a great impact on modern people's daily lives and industrial development but have the disadvantage of requiring hundreds of years to completely decompose when trying to dispose of plastics because plastics are not naturally decomposed. Since such a characteristic causes environmental pollution, the management of plastic waste is becoming a global issue, and disposal methods such as landfills, incineration, and the like are present, but plastic waste does not decompose and generate harmful gases, causing further pollution.

To overcome such limitations, biodegradable plastics having natural and quick degradability are degradable plastics that not only have no environmental impact but are also attracting attention as a solution to environmental pollution. The main mechanism of biodegradable plastics is that a plastic material is broken down into low-molecular materials due to enzymes secreted by microorganisms, and then microorganisms absorb and metabolize the low-molecular materials, ultimately returning them to nature.

However, since biodegradable plastics, which are being used instead of commercial plastics due to concerns for environmental issues, have poor moldability in molding processes such as extrusion and injection molding required for producing plastic products, the usability of biodegradable plastics as a single polymer is limited.

The above description has been possessed or acquired by the inventor(s) in the course of conceiving the present disclosure and is not necessarily an art publicly known before the present application is filed.

### DISCLOSURE OF THE INVENTION

### TECHNICAL GOALS

To solve the above-described problems, the present disclosure is to provide a biodegradable plastic resin composition with an improved moldability.

Specifically, the present disclosure is to provide a biodegradable plastic molded product having an improved moldability without other additives by supplementing a low crystallinity and durability of a biodegradable plastic having an inhibited moldability by adding a nanocellulose.

However, goals to be achieved by the present disclosure are not limited to those described above, and other goals not mentioned above can be clearly understood by one of ordinary skill in the art from the following description.

### TECHNICAL SOLUTIONS

A biodegradable plastic resin composition according to an embodiment of the present disclosure includes a biodegradable plastic; and a nanocellulose additive.

According to an embodiment, the biodegradable plastic may include at least one selected from a group consisting of polylactic acid (PLA), polybutylene adipate terephthalate (PBAT), polybutylene succinate (PBS), polycaprolactone (PCL), polyglycolic acid (PGA), poly-3-hydroxybutyrate (P3HB), and polyhydroxyalkanoate (PHA).

According to an embodiment, the biodegradable plastic may be in an amount of 90% by weight (wt%) or greater in the biodegradable plastic resin composition.

According to an embodiment, the nanocellulose additive may include a cellulose nanocrystal (CNC), a cellulose nanofiber (CNF), or both.

According to an embodiment, the cellulose nanocrystal may have a length of 1 nanometer (nm) to 900 nm, and the cellulose nanofiber may have a diameter of 1 nm to 90 nm.

According to an embodiment, a weight ratio of the cellulose nanocrystal to the cellulose nanofiber may be in a range of 1 : 0.5 to 1 : 0.1.

According to an embodiment, the nanocellulose additive may be in an amount of 0.1 wt% to 10 wt% in the biodegradable plastic resin composition.

According to an embodiment, the nanocellulose additive may be 1000 parts per million (ppm) or less in the biodegradable plastic resin composition.

According to an embodiment, the nanocellulose additive may be in a form of a powder or a hydrodispersion gel.

According to an embodiment, the nanocellulose additive in the form of the hydrodispersion gel may be in an amount of 0.1 wt% to 5 wt% in the biodegradable plastic resin composition.

According to an embodiment, a biodegradability of the biodegradable plastic resin composition may be 90% or greater as of 180 days, and in a moldability of the biodegradable plastic resin composition, a stretching ratio in a machine direction (MD) or a transverse direction (TD) may be 3.1 to 3.5 times, or a difference in the stretching ratio between the MD and the TD may be 0.2 times or less.

A biodegradable plastic molded product according to an embodiment of the present disclosure may be formed by the biodegradable plastic resin composition according to the present disclosure alone or formed by adding the composition as a masterbatch.

A method of manufacturing a biodegradable plastic molded product according to an embodiment of the present disclosure includes a step of producing a nanocellulose additive; a step of forming a biodegradable plastic resin composition by adding the nanocellulose additive to a biodegradable plastic; and a step of forming a molded product using the composition.

According to an embodiment, the step of forming the biodegradable plastic resin composition may be mixing the nanocellulose additive and the biodegradable plastic by solvent mixing or melt mixing.

According to an embodiment, a high content masterbatch of the nanocellulose additive may be produced through a primary dispersion in the biodegradable plastic, and the masterbatch may be redispersed with a polymer.

According to an embodiment, the step of forming the molded product may be performed by injection molding, extrusion molding, blow molding, or casting molding.

### EFFECTS OF THE INVENTION

The present disclosure may provide a biodegradable plastic resin composition with an improved moldability.

Specifically, the present disclosure may provide a biodegradable plastic molded product having an improved moldability without other additives by supplementing a low crystallinity and durability of a biodegradable plastic having an inhibited moldability by adding a nanocellulose.

### BRIEF DESCRIPTION OF DRAWINGS

FIG. 1 illustrates an image of a film manufactured according to a comparative example of the present disclosure.
FIG. 2 illustrates an image of a film manufactured according to an example of the present disclosure.

### BEST MODE FOR CARRYING OUT THE INVENTION

Hereinafter, embodiments will be described in detail with reference to the accompanying drawings. However, various alterations and modifications may be made to the embodiments, and the embodiments are not meant to be limited by the descriptions of the present disclosure. The embodiments should be understood to include all changes, equivalents, and replacements within the idea and the technical scope of the disclosure.

The terminology used herein is for the purpose of describing particular embodiments only and is not intended to be limiting. The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

In addition, when describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure. In addition, terms such as first, second, A, B, (a), (b), and the like may be used to describe components of the embodiments. Each of these terms is not used to define an essence, order or sequence of a corresponding component but used merely to distinguish the corresponding component from other component(s). It should be understood that if it is described in the specification that one component is "connected," "coupled," or "joined" to another component, the former may be directly "connected," "coupled," and "joined" to the latter or "connected," "coupled," and "joined" to the latter via another component.

A component, which has the same common function as a component included in any one embodiment, will be described by using the same name in other embodiments. Unless disclosed to the contrary, the description of any one embodiment may be applied to other embodiments, and the specific description of the repeated configuration will be omitted.

A biodegradable plastic resin composition according to an embodiment of the present disclosure includes a biodegradable plastic; and a nanocellulose additive.

The biodegradable plastic resin composition according to the present disclosure may solve environmental issues caused by the use of conventional plastics by using the biodegradable plastic, and may supplement an issue of moldability, caused by a low crystallinity and durability of biodegradable plastics when biodegradable plastics are used, by adding the nanocellulose additive.

According to an embodiment, the biodegradable plastic may include at least one selected from a group consisting of polylactic acid (PLA), polybutylene adipate terephthalate (PBAT), polybutylene succinate (PBS), polycaprolactone (PCL), polyglycolic acid (PGA), poly-3-hydroxybutyrate (P3HB), and polyhydroxyalkanoate (PHA).

According to an embodiment, the biodegradable plastic is an eco-friendly resin that refers to a plastic that may be decomposed by bacteria or living organisms. Polylactic acid, which is made from plant-based raw materials such as corn or starch, is the most common biodegradable material and is used for food containers because it is inexpensive to produce, and harmful substances such as environmental hormones or heavy metals are not detected. The polylactic acid may include at least one selected from a group consisting of an L-isomer, a D-isomer, and an L,D-isomer. According to an embodiment, polybutylene adipate terephthalate and polybutylene succinate are generated by synthesizing materials such as butanediol found in nature among petroleum raw materials, and although they are more expensive than the polylactic acid, they have advantages of being more heat-resistant, flexible, and biodegradable in the soil without special conditions.

According to an embodiment, the biodegradable plastic may be in an amount of 90% by weight (wt%) or greater in the biodegradable plastic resin composition.

According to an embodiment, if the amount of the biodegradable plastic is less than 90 wt%, an issue of agglomeration may occur, thereby reducing injection properties, because an amount of a nanocellulose is 10 wt% or greater. If the amount of the biodegradable plastic is within the above range, a biodegradable plastic resin composition having an excellent moldability and stable biodegradability may be formed, and an appropriate amount may vary depending on a molding form, such as spinning, injection, or extrusion.

According to an embodiment, the nanocellulose additive may include a cellulose nanocrystal (CNC), a cellulose nanofiber (CNF), or both.

According to an embodiment, a nanocellulose is a biodegradable reinforcing agent that may improve reduced physical properties of biodegradable plastics, and may solve issues of existing inorganic reinforcing agents. In addition, the nanocellulose may be biodegraded and thermally decomposed and may be, in particular, properly decomposed when combined with biodegradable plastics such as PLA, PBAT, PBS, and PHA, and a composite including them are decomposed by microorganisms together with a substrate when landfilled.

According to an embodiment, the nanocellulose is divided into cellulose nanocrystals and cellulose nanofibers, nanocrystals are obtained through chemical treatment such as acid hydrolysis, cellulose-decomposing enzymes, ionic liquid, and the like, and nanofibers are generally prepared through a mechanical treatment. Nanocrystals have a disadvantage of a low yield even though a production process is simple and energy costs are low in comparison to nanofibers, which may be solved by using nanocrystals and nanofibers together.

According to an embodiment, the cellulose nanocrystal may have a length of 1 nanometer (nm) to 900 nm, and the cellulose nanofiber may have a diameter of 1 nm to 90 nm.

According to an embodiment, the cellulose nanocrystal may have a length in one direction of 1 nm to 900 nm, that is, of a few nm to hundreds of nm. If the length is not within the above range, there may be an issue in that a moldability improvement effect is not exhibited due to a reduction in a dispersibility. The size of a nanocrystal may be a diameter if the nanocrystal is spherical, and may be a longest length if the nanocrystal is not spherical.

According to an embodiment, the cellulose nanofiber may have a diameter of 1 nm to 90 nm, that is, of a few nm to tens of nm. If the diameter of the nanofiber exceeds several tens of nm, a nanotization may not be sufficiently performed and the moldability improvement effect may not be shown due to a decrease in cohesion and dispersibility between fibers.

According to an embodiment, a weight ratio of the cellulose nanocrystal to the cellulose nanofiber may be in a range of 1 : 0.5 to 1 : 0.1.

According to an embodiment, if the weight ratio of the cellulose nanocrystal to the cellulose nanofiber is within the above range, an advantage of a combination of spherical and fibrous cellulose particles being applied to induce the moldability improvement effect with an addition of a relatively small amount may be present, and a biodegradable plastic resin composition with an excellent moldability and stable biodegradability may be formed.

According to an embodiment, the nanocellulose additive may be in an amount of 0.1 wt% to 10 wt% in the biodegradable plastic resin composition.

According to an embodiment, the nanocellulose additive may be desirably in an amount of 0.1 wt% to 5 wt%, and more desirably in an amount of 1 wt% to 5 wt%. If the amount of the nanocellulose additive exceeds 10 wt%, mechanical properties or transparency may deteriorate.

According to an embodiment, the nanocellulose additive may be 1000 parts per million (ppm) or less in the biodegradable plastic resin composition.

According to an embodiment, the nanocellulose additive may be desirably in a range of 10 ppm to 1000 ppm, and more desirably in a range of 10 ppm to 500 ppm.

According to an embodiment, when the nanocellulose additive is added in an amount within the above range, it is possible to supplement a low crystallinity and durability of a plastic resin composition and secure the moldability.

According to an embodiment, the nanocellulose additive may be in a form of a powder or a hydrodispersion gel.

According to an embodiment, the nanocellulose additive may be used in a form of a hydrodispersion gel using a micronized nanocellulose suspension in a water-dispersion state, or in a form of a powder by drying fine fibers.

According to an embodiment, the nanocellulose additive in the form of the hydrodispersion gel may be in an amount of 0.1 wt% to 5 wt% in the biodegradable plastic resin composition.

According to an embodiment, desirably, the nanocellulose additive in the form of the hydrodispersion gel may be produced as a masterbatch and used.

According to an embodiment, desirably, the nanocellulose additive in the form of the hydrodispersion gel may be in an amount of 0.1 wt% to 2.5 wt%. If the amount of the nanocellulose additive in the form of the hydrodispersion gel exceeds 5 wt%, a miscibility with a hydrophobic polymer may be reduced due to a high moisture content or moisture may not be effectively removed during a mixing process with a polymer, thereby reducing the physical properties and moldability.

According to an embodiment, a biodegradability of the biodegradable plastic resin composition may be 90% or greater as of 180 days, and in a moldability of the biodegradable plastic resin composition, a stretching ratio in a machine direction (MD) or a transverse direction (TD) may be 3.1 to 3.5 times, or a difference in the stretching ratio between the MD and the TD may be 0.2 times or less.

According to international standards, a biodegradability of plastics is recognized as biodegradation when it reaches the final degradation, and multiple methods for measuring biodegradability are present, however, the ISO 14855 test method is the most widely used. The ISO 14855 test method is a test method of measuring aerobic biodegradability and decay of plastic materials under controlled composting conditions and measuring carbon dioxide emissions.

According to an embodiment, the biodegradable plastic resin composition shows a biodegradability in which more than 90% of organic carbon is converted into inorganic carbon over 180 days. If the above biodegradability is not shown, it may be difficult to recognize it as biodegradable.

According to an embodiment, the moldability of the biodegradable plastic resin composition may be determined by stretching a film. In general, in a process in which a film is pulled out of a machine (roll), a direction in which the film is pulled out of the machine (roll) is defined as a machine direction (MD), and a direction perpendicular thereto is defined as a transverse direction (TD). The moldability may be determined based on a stretching ratio in the MD and the TD and a difference in the stretching ratio between the MD and the TD.

A biodegradable plastic molded product according to an embodiment of the present disclosure may be formed by the biodegradable plastic resin composition according to the present disclosure alone or formed by adding the composition as a masterbatch.

According to an embodiment, a masterbatch is a raw material in the form of pellets in which a plastic resin and additives are highly concentrated and dispersed. The biodegradable plastic resin composition may be formed as a masterbatch and used to form a molded product.

A method of manufacturing a biodegradable plastic molded product according to an embodiment of the present disclosure includes a step of producing a nanocellulose additive; a step of forming a biodegradable plastic resin composition by adding the nanocellulose additive to a biodegradable plastic; and a step of forming a molded product using the composition.

According to an embodiment, the nanocellulose additive may be produced in a form of a powder or a hydrodispersion gel.

According to an embodiment, the step of forming the biodegradable plastic resin composition may be mixing the nanocellulose additive and the biodegradable plastic by solvent mixing or melt mixing.

According to an embodiment, a method of solvent-mixing the nanocellulose additive and biodegradable plastic may be solvent-mixing using an organic solvent. Here, a nanocellulose may be mixed in a form of a powder, a hydrodispersion gel, or both, however, since the nanocellulose in the form of the hydrodispersion gel is based on water, a dispersibility in the organic solvent may decrease.

According to an embodiment, the nanocellulose additive and the biodegradable plastic may be melt-mixed. Since an organic solvent is not used, it may be an environmentally friendly mixing method, and a nanocellulose may be mixed in a form of a powder, a hydrodispersion gel, or both, however, the hydrodispersion gel needs to have a high concentration, and in the case of cellulose nanofibers with a low crystallinity, if heated for a long period of time during melt-mixing, the nanocellulose may be damaged by heat.

According to an embodiment, a high content masterbatch of the nanocellulose additive may be produced through a primary dispersion in the biodegradable plastic, and the masterbatch may be redispersed with a polymer.

According to an embodiment, the polymer may be mixed with polybutylene adipate terephthalate (PBAT), polylactic acid (PLA), polyvinyl alcohol (PVA), and the like, to produce a masterbatch.

According to an embodiment, to increase a dispersibility within a polymer, it is desirable to produce a masterbatch of the nanocellulose additive and form a molded product by redispersing the masterbatch.

According to an embodiment, the step of forming the molded product may be performed by injection molding, extrusion molding, blow molding, or casting molding.

According to an embodiment, the molded product may be in a form of a rigid or soft plastic product.

Hereinafter, the present disclosure will be described in more detail with reference to the following example and comparative example.

However, the following example is only for illustrating the present disclosure, and the description of the present disclosure is not limited to the following example.

### Example

1 wt% of cellulose nanocrystals (CNC) was added to 99 wt% of polybutylene adipate terephthalate (PBAT) and melt-mixed at 150°C using a twin screw extruder, to prepare a biodegradable plastic resin composition.

### Comparative Example

A biodegradable plastic composition with 100 wt% of polybutylene adipate terephthalate without any treatment was prepared.

### Experimental Example: Identification of Moldability

To identify a moldability, a T-die film was extruded and molded at 165°C and a screw speed of 50 rpm for the example and comparative example, and then a product was verified.

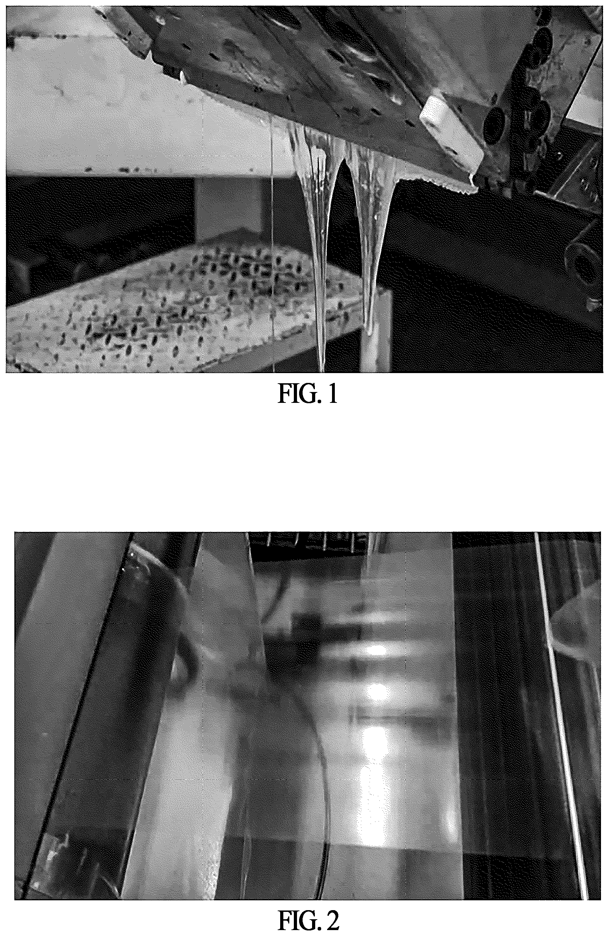

FIG. 1 illustrates an image of a film manufactured according to a comparative example of the present disclosure, and FIG. 2 illustrates an image of a film manufactured according to an example of the present disclosure. Referring to FIGS. 1 and 2, in the comparative example using a single biodegradable plastic, it can be confirmed that it is impossible to maintain the shape of the film in an extrusion hole due to a decrease in the moldability. On the contrary, in the example in which the cellulose nanocrystals were added, it can be confirmed that the shape of the film is completely completed and accordingly, it can be confirmed that the moldability of the example is excellent.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

## Claims

1. A biodegradable plastic resin composition comprising:
a biodegradable plastic; and
a nanocellulose additive.

2. The biodegradable plastic resin composition of claim 1, wherein the biodegradable plastic comprises at least one selected from a group consisting of polylactic acid (PLA), polybutylene adipate terephthalate (PBAT), polybutylene succinate (PBS), polycaprolactone (PCL), polyglycolic acid (PGA), poly-3-hydroxybutyrate (P3HB), and polyhydroxyalkanoate (PHA).

3. The biodegradable plastic resin composition of claim 1, wherein the biodegradable plastic is in an amount of 90% by weight (wt%) or greater in the biodegradable plastic resin composition.

4. The biodegradable plastic resin composition of claim 1, wherein the nanocellulose additive comprises a cellulose nanocrystal (CNC), a cellulose nanofiber (CNF), or both.

5. The biodegradable plastic resin composition of claim 4, wherein
the cellulose nanocrystal has a length of 1 nanometer (nm) to 900 nm, and
the cellulose nanofiber has a diameter of 1 nm to 90 nm.

6. The biodegradable plastic resin composition of claim 4, wherein a weight ratio of the cellulose nanocrystal to the cellulose nanofiber is in a range of 1 : 0.5 to 1 : 0.1.

7. The biodegradable plastic resin composition of claim 1, wherein the nanocellulose additive is in an amount of 0.1 wt% to 10 wt% in the biodegradable plastic resin composition.

8. The biodegradable plastic resin composition of claim 1, wherein the nanocellulose additive is 1000 parts per million (ppm) or less in the biodegradable plastic resin composition.

9. The biodegradable plastic resin composition of claim 1, wherein the nanocellulose additive is in a form of a powder or a hydrodispersion gel.

10. The biodegradable plastic resin composition of claim 9, wherein the nanocellulose additive in the form of the hydrodispersion gel is in an amount of 0.1 wt% to 5 wt% in the biodegradable plastic resin composition.

11. The biodegradable plastic resin composition of claim 1, wherein
a biodegradability of the biodegradable plastic resin composition is 90% or greater as of 180 days, and
in a moldability of the biodegradable plastic resin composition, a stretching ratio in a machine direction (MD) or a transverse direction (TD) is 3.1 to 3.5 times, or a difference in the stretching ratio between the MD and the TD is 0.2 times or less.

12. A biodegradable plastic molded product formed by the biodegradable plastic resin composition of claim 1 alone or formed by adding the composition as a masterbatch.

13. A method of manufacturing a biodegradable plastic molded product, the method comprising:
a step of producing a nanocellulose additive;
a step of forming a biodegradable plastic resin composition by adding the nanocellulose additive to a biodegradable plastic; and
a step of forming a molded product using the composition.

14. The method of claim 13, wherein the step of forming the biodegradable plastic resin composition is mixing the nanocellulose additive and the biodegradable plastic by solvent mixing or melt mixing.

15. The method of claim 13, wherein a high content masterbatch of the nanocellulose additive is produced through a primary dispersion in the biodegradable plastic, and the masterbatch is redispersed with a polymer.

16. The method of claim 13, wherein the step of forming the molded product is performed by injection molding, extrusion molding, blow molding, or casting molding.
